# EUROPEAN PATENT SPECIFICATION

(11) **EP 3 323 679 B1**
(45) Date of publication and mention of the grant of the patent: **17.07.2019**
(21) Application number: 16465554.0
(22) Date of filing: 16.11.2016
(51) Int. Cl.: B60R 11/00, B60S 1/08, B60R 11/04

(54) **ATTACHMENT SYSTEM**
BEFESTIGUNGSSYSTEM
SYSTÈME DE FIXATION

(43) Date of publication of application: 23.05.2018
(73) Proprietor: Continental Automotive GmbH, 30165 Hannover (DE)
(72) Inventor: Lazar, Adrian-Catalin, 300495 Timisoara (RO); Vuletici, Goran, 300756 Timisoara (RO); Alecsa, Valerian, 60549 Frankfurt am Main (DE); Bacican, Cristina, 300292 Timisoara (RO)
(74) Representative: Reuter, Andreas

(56) References cited:
- DE-A1-102004 061 362
- DE-A1-102011 121 003
- DE-A1-102012 021 571

## Description

The present invention relates to an attachment system for attaching at least one electronic component on a windshield of a vehicle, in particular an automobile.

### TECHNICAL BACKGROUND

In the automotive and other industries sensors or electrical/ electronic components are mounted on the windshield using custom designed brackets.

In order to ensure proper fixation during the life time and a proper functionality for all components, it is mandatory to ensure accurate positioning between the sensor/bracket and the windshield. Due to the fact that there is a technological limitation in the production process of the windshields and windshield brackets, it is very hard to obtain necessary tolerances for proper positioning and orientation between these two parts due to large gluing areas.

The gluing process is also limited by gluing thickness between the gluing surface and windshield. If gluing thickness will exceed certain threshold, fixation of the bracket will be affected during the life time.

Furthermore, the size and shape of a vehicle are different from one to another, also the installation area, e.g., windshield, bumper, chassis etc. for sensor mounting is different. This leads to the necessity of producing a custom design bracket for every vehicle in order to ensure proper position and orientation of the sensors. A custom bracket implies high costs and time for development and production. A high cost translates into new tooling and qualification tests for each specific bracket.

In DE 10 2011 121 003 A1 a support device is disclosed for fastening a window pain, in particular a windscreen, of a motor vehicle, comprising a support plate. In a support assembly, the support plate is glued to the windscreen on its side remote camera side.

Further, in DE 10 2004 061362 A1 a sensor device is disclosed which has a holder attached to a windscreen. A cover encloses the holder and a sensor element. The holder is made of sintered metal and is attached to a plastics carrier.

In DE 10 2012 021571 A1 a holder is disclosed for fastening at least one component to a glass panel, in particular to a windscreen of a motor vehicle, having a supporting body which has a lower side with which the supporting body can be glued to the glass panel, and an upper side on which holding elements for fastening the at least one component to the supporting body is arranged.

Furthermore, DE 10 2011 121003 A1 discloses a support device for fastening to a window, in particular a windscreen of a motor vehicle. The support device comprises a support plate which can be fastened to the window and which has at least one support element to which at least one camera , a sensor or the like can be fastened in a fastening region of the support plate.

### SUMMARY OF THE INVENTION

Against this background, an objective of the present invention is to provide an improved attachment system for attaching at least one electronic component on a windshield of a vehicle.

This objective is achieved according to the invention by an attachment system having the features in claim 1.

Attachment system for attaching at least one electronic component on a windshield of a vehicle, wherein the attachment system comprises:
fixation elements, wherein each fixation element comprises a base and a top portion, wherein the fixation element is fixable with its base on the windshield by an adhesive; and
a cover device including the at least one electronic component, wherein the cover device comprises a cover element and further a bracket, wherein bracket comprises mounting sections which are designed to engage with the top portion of a corresponding fixation element to mount the cover device on the windshield, wherein the mounting section comprises an opening, wherein the opening comprises a first opening section to receive the corresponding fixation element and a second opening section to hold the fixation element in a mounting position.

The above mentioned inventive attachment system provides a cover device for covering and mounting electronic components such as sensors which can be easily installed in the vehicle. The direct benefits of this solution are cost and time saving.

The concept underlying the invention is to provide an attachment system for attaching at least one electronic component on a windshield of a vehicle, wherein the cover device is mounted on the windshield by using fixation elements, wherein each fixation element is attached to the windshield with its base by using an adhesive. Thus, not the bracket of the cover device requires to be attached with its bottom to the windshield but can be mounted to the fixation elements already mounted on the windshield with their base at predefined positions covering only a small area of the windshield in contrast to the prior art as described before. In the prior art a conventional bracket is glued with its complete bottom onto a corresponding windshield which results in the above described disadvantages.

Advantageous embodiments and developments of the invention emerge from the dependent claims.

Reference(s) to "embodiment(s)" throughout the description which are not under the scope of the appended claims merely represent possible exemplary executions and are therefore not part of the present invention.

According to an embodiment of the invention the bracket and the cover element form two separate parts, wherein the cover element is preferably releasable attachable to the bracket, in particular before and/or after the bracket is mounted on the windshield.

In a further embodiment of the invention the bracket is integrated into the cover element, wherein preferably the mounting sections of the bracket are integrated into the cover element, wherein the mounting sections of the bracket and the cover element preferably form one part.

According to an embodiment of the invention the bracket and the cover element are pivotable connected with each other, preferably by at least one hinge, wherein the cover element is pivotable around the bracket in a position in which the cover device is closed and a position in which the cover device is open and preferably accessible.

According to a further embodiment of the invention the bracket and/or the cover element comprise at least one receiving and holding section to receive and hold the at least one electronic component, wherein the electronic component is in particular a sensor, such as a rain sensor, temperature sensor, light sensor or a camera.

According to an embodiment of the invention at least one mounting section comprises an additional hook to snap over the fixation element, when the fixation element has reached its mounting position at the mounting section.

In a further embodiment of the invention the bracket comprises at least one latching means which is designed to lock in place on the cover element, wherein the cover element is preferably provided with a corresponding first wall portion which protrudes from an inner wall of the cover element and is designed so that the latching means lock in place on said first wall portion.

In another embodiment of the invention the receiving and holding section of the bracket comprises receiving means to receive the at least one electronic component, wherein the receiving means are designed to receive a corresponding fixation means of the electronic component to be mounted on the bracket, wherein the cover element comprises preferably a second wall portion which protrudes from the inner wall of the cover element and is positioned and designed to hold down the corresponding fixation means of the electronic component, when the cover device is closed.

According to an embodiment of the invention the cover element comprises a third wall portion which protrudes from the inner wall of the cover element in a vertical direction and contacts the bracket, when the cover device is closed.

According to a further embodiment of the invention the cover device comprises a stray light cover, wherein the stray light cover is integrated in the cover element or the bracket or wherein the stray light cover forms a separate part which is designed to be attachable to a camera as electronic component, to be attachable to the bracket and/or to be attachable to the cover element.

According to another embodiment of the invention the fixation element is a fixation pin, wherein the top portion of the fixation pin is a head which is connected to the base by a shaft.

In an embodiment of the invention the mounting section is provided with additional ribs which are designed to engage with the corresponding fixation pin to hold the bracket in its position.

In a further embodiment of the invention the fixation element is a fixation clip, wherein the top portion of the fixation clip is a hook portion designed to snap over a corresponding mounting section of the bracket.

### CONTENT OF THE DRAWINGS

The present invention is explained below in greater detail with the aid of embodiments specified in the schematic figures in the drawings. These are as follows:
- Fig. 1: shows a perspective top view of a bracket and fixation elements of an attachment device according to a first embodiment of the invention;
- Fig. 2: shows an enlarged view of the bracket and one of the fixation elements of Fig. 1;
- Fig. 3: shows the fixation elements of Figs. 1 and 2, when received in a corresponding receiving section of the bracket;
- Fig. 4: shows an enlarged view of the bracket and one of the fixation elements of Fig. 3.
- Fig. 5: shows a cross-sectional view and a top view of the fixation element and the bracket of Figs. 3 and 4.
- Fig. 6: shows the fixation elements when positioned in a corresponding locking section of the bracket;
- Fig. 7: shows an enlarged view of the bracket and one of the fixation elements of Fig. 6;
- Fig. 8: shows a cross-sectional view and a top view of the fixation element and the bracket of Figs. 6 and 7 are shown;
- Fig. 9: shows a top view of the bracket with its main assembly direction X (up-down) and Y (left-right);
- Fig. 10: shows a perspective view of the cover device and the fixation elements according to a second embodiment of the present invention, before the cover device is attached to a windshield of a vehicle;
- Fig. 11: shows a front view of the cover device according to Fig. 10 and two sectional views A-A and B-B thereof.
- Fig. 12: shows two details D and E of Fig. 11;
- Fig. 13: shows a perspective view of the cover device and the fixation elements according to a further example of the second embodiment of the invention, before the cover device is attached to the wind-shield of a vehicle;
- Fig. 14: shows a front view of the cover device according to Fig. 13 and a sectional view A-A thereof;
- Fig. 15: shows two details D and B of Fig. 14;
- Fig. 16: shows a perspective view of a cover element and a bracket of the cover device of the attachment system according to a third embodiment of the invention, wherein the cover device is shown in an open position;
- Fig. 17: shows a perspective view of the cover device of Fig. 16 in a closed position, wherein a camera is mounted within the cover device;
- Fig. 18: shows a perspective view of a windshield on which fixation elements of the attachment device of Figs. 16 and 17 are mounted;
- Fig. 19: shows a cross-sectional view of the cover device provided with the camera of Fig. 17 in an open position;
- Fig. 20: shows a cross-sectional view of the cover device provided with the camera of Fig. 17 in the closed position; and
- Fig. 21: shows a further cross-sectional view of the cover device of Fig. 20, wherein one of the fixation pins is shown.

The accompanying drawings should convey further understanding of the embodiments of the invention. They illustrate embodiments of the invention and clarify the principles and concepts behind the invention in conjunction with the description. Other embodiments and many of the described advantages are apparent with respect to the drawings. The elements of the drawings are not necessarily illustrated true to scale in relation to each other.

In the figures in the drawing, the same elements, features and components, or those serving the same function and having the same effect, are provided with the same reference numerals in each case - unless otherwise specified.

### DESCRIPTION OF EMBODIMENTS

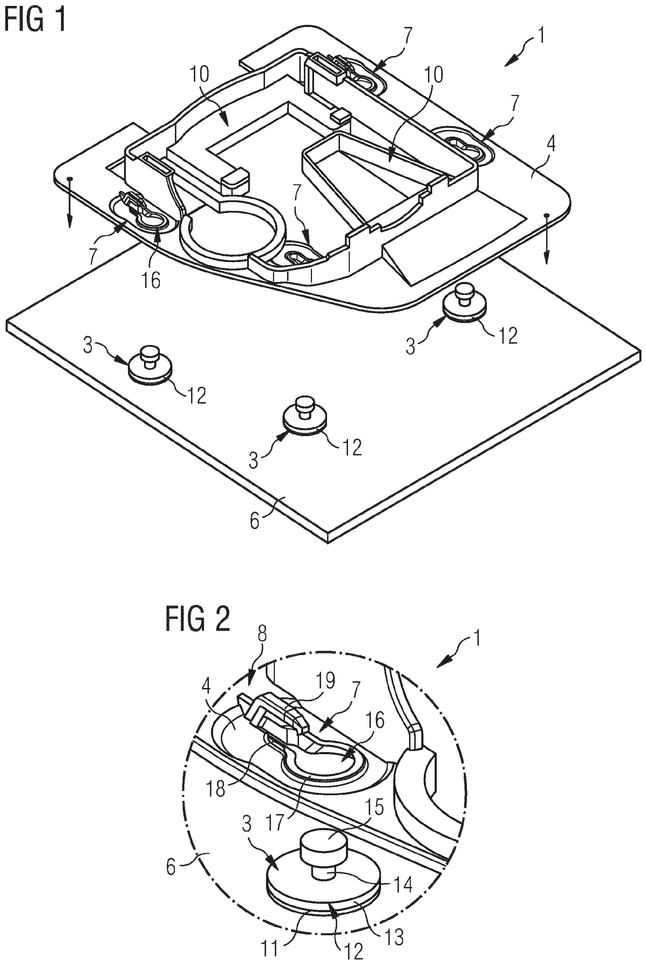

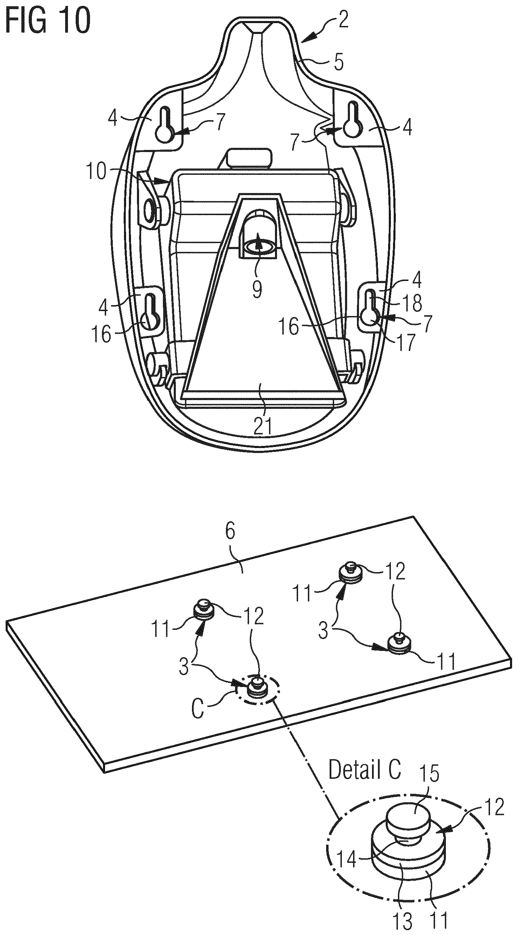

Figs. 1 to 9 illustrate a first embodiment of an attachment system 1 according to the invention, wherein the attachment system 1 comprises a cover device 2 (which is not shown in Figs. 1 to 9) and three fixation elements 3. The cover device 2 (shown exemplary in further embodiments in Figs. 10-17 and 19-21) comprises of a bracket 4 and a cover element 5. Examples of the cover element 5 (not shown in Figs. 1-9) are illustrated and described with respect to Figs. 10-17 and 19-21. Therefore reference is made to the description of the cover element 5 in Figs. 10-17 and 19 -21 to avoid unnecessary repetitions. However, the invention is not limited to said particular cover elements 5 described with respect to Figs. 10-17 and 1-21 adapted to be used with the bracket 4 in Figs. 1-9. The cover element 5 of the cover device 2 in Figs. 1 to 9 and as illustrated exemplary in Figs. 10-17 and 19-21 is designed to be attachable or connectable to the bracket 4 shown in Figs. 1-9. The attachment or connection of the cover element 5 on the bracket 4 is not illustrated in Figs. 1-9 for clarity reasons.

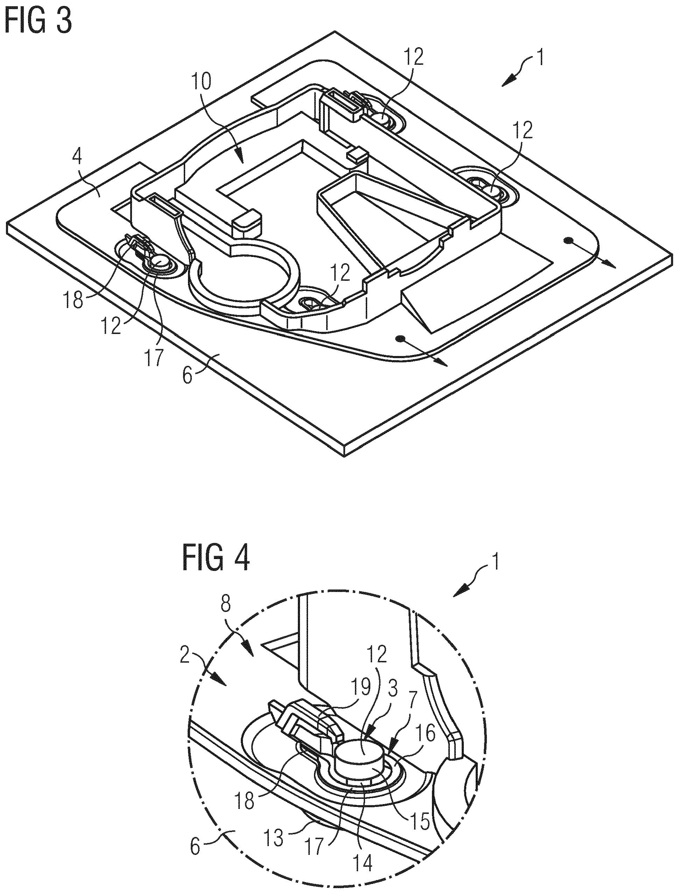

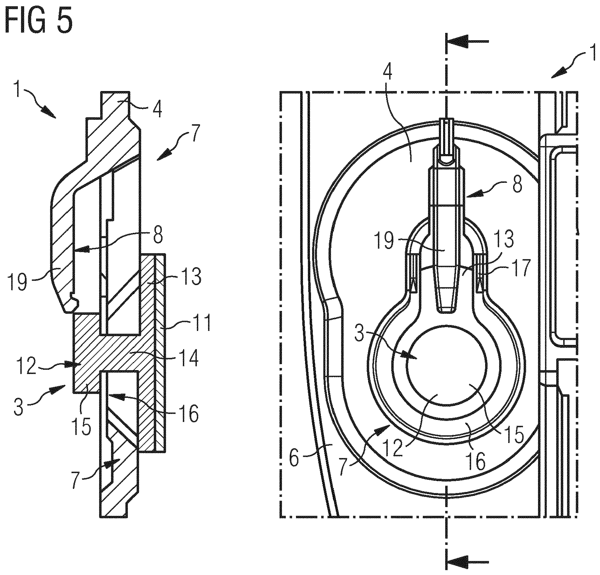

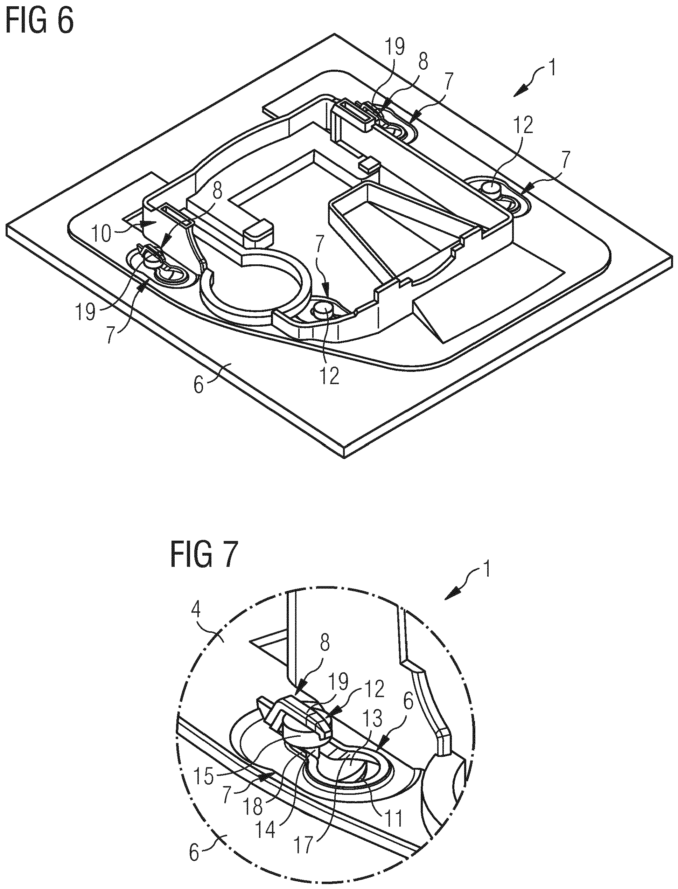

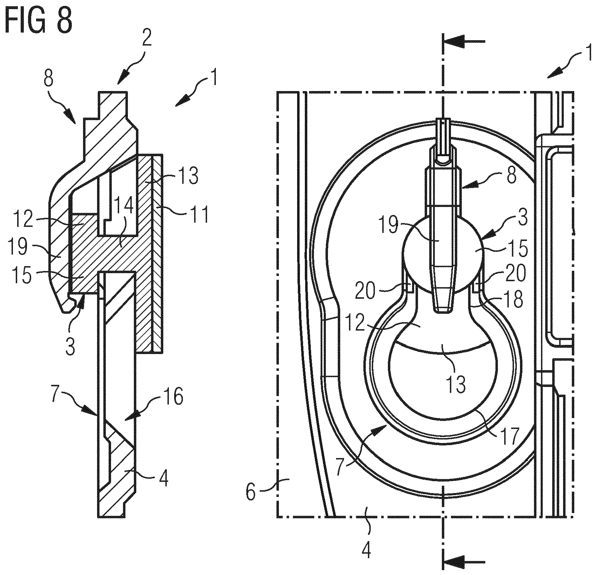

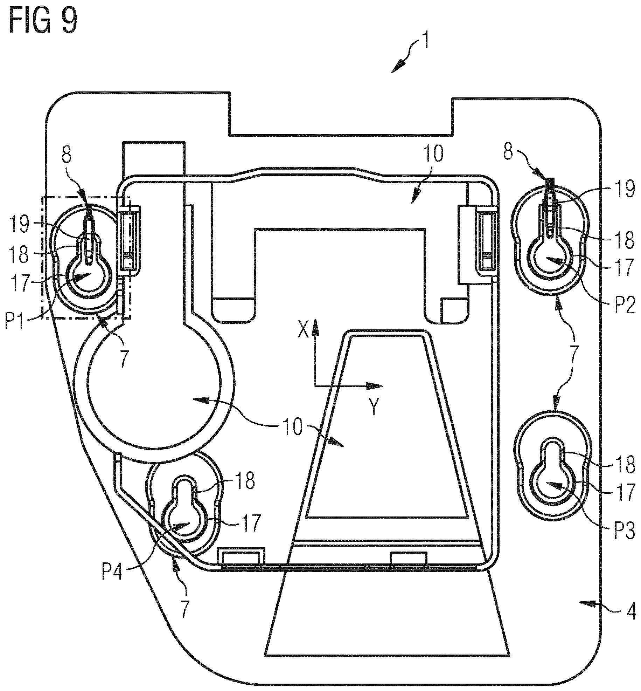

In Fig. 1 a perspective top view of the bracket 4 is shown before mounting the bracket 4 on the fixation elements 3 attached to a windshield 6 of a vehicle. Fig. 2 shows an enlarged view of the bracket 4 and one of the fixation elements 3 of Fig. 1. Further, Fig. 3 shows the bracket 4 when in a preassembly position, with the fixation elements 3 in the mounting section 7 of the bracket 4, wherein Fig. 4 shows an enlarged view of the bracket 4 and the fixation elements 3 of Fig. 3. Furthermore, Fig. 5 shows a cross-sectional view and a top view of one of the fixation elements 3 and the bracket 4 of Figs. 3 and 4 in the preassembled position. Moreover, Fig. 6 shows the bracket 4, on the fixation element 3 which is now in the locking section 8 on the bracket 4 which is now in its final assembly position, wherein Fig. 7 shows an enlarged view of the bracket 4 and one of the fixation elements 3 of Fig. 6. In Fig. 8 a cross-sectional view and a top view of the fixation element 3 and the bracket 4 of Figs. 6 and 7 are shown. Further, Fig. 9 illustrates the direction X,Y of the bracket 4, to show that the fixation method also locks the bracket 4 in place on these directions, depending on the fixation features. Fig. 9 shows only the bracket 4 with its pin fixation features / mounting sections (noted here with "7") PI, P2, P3 and P4. These fixation features all have different geometries in order to compensate tolerance differences and block degrees of freedom, this is described correctly on page 17 In other words, Fig. 9 shows a top view of the bracket 4 with its main assembly direction X (up-down) and Y (left-right), these are also the degrees of freedom the bracket can move since direction z (normal to windshield) will always be blocked once the bracket 4 is assembled (in particular in case additional crash ribs are provided as shown, e.g., in the embodiment in Fig. 8. However, said crash ribs are optional).

So far, as described before, electronic sensors which are mounted on a windshield of a vehicle or car are fixed on the windshield using a bracket, which is a plastic part and which comprises an interface for each sensor used. The function of the bracket is to hold the sensors in place. This bracket is attached to the windshield using glue between the bottom of the bracket and the windshield or double-sided adhesive tape in some cases. Gluing the bracket with its bottom on the windshield involves creating a large area on the bottom of the bracket in order to apply the glue. This bottom surface of the bracket has the shape of the windshield which is a complex surface that is complicated to be according to the nominal CAD shape because of the injection process resulting in shrinkage and deformations. The glue or glue strips need to have tight tolerances, which requires a precise injection tool. This also increases the cost of the bracket. In order to have a firm fixing of the bracket on the windshield, the glue strips needs to cover a large area of the bracket, area which need to be all around the bracket for a uniform fixture and a strong enough adhesion force.

Removing the need of fully gluing the bottom of the bracket on the windshield, removes the need of a complex surface for applying the glue.

According to the inventive attachment system 1, as will be described in the following in further detail, it is possible to disassemble the bracket 4 of the attachment system 1 from the windshield 6 and further reassemble the bracket 4 on the windshield 6. This is not possible with the prior art bracket described before which is glued on a windshield with its bottom surface.

As shown in Figs. 1 to 9, the inventive attachment system 1 comprises the cover device 2 comprising the bracket 4 and the cover element 5, which is not shown in the figures. On the bracket 4 one or more electronic components 9, such as sensors, e.g. a camera etc., can be secured. The bracket 4 is therefore provided with an interface for each electronic component 9.

In an embodiment of the invention, the interface of bracket 4 can comprise a receiving and holding section 10 for at least one electronic component 9 to receive and hold the at least one electronic component 9. As an electronic component 9 for example a sensor, e.g. a temperature sensor, a light sensor, a rain sensors etc., or a camera, can be fixed to the bracket 4. However, the invention is not limited to the above mentioned sensors. The cover element 5 forms in the embodiment as shown in Figs. 1-9 a beauty case covering the electronic components 9, in particular their side facing the interior of the vehicle or car, without interfering with said electronic components 9 or impairing the function of said electronic components as shown exemplary in following Figs. 10, 11, 13, 14, 16.

According to the first embodiment of the invention the bracket 4 and the cover element 5 are designed as two separate elements, wherein the cover element 5 is detachably attached to the bracket 4. The bracket 4 and/or the cover element 5 can be made, e.g., of plastic etc.. As shown in following Figs. 10 to 15 and Figs. 16 to 21 The bracket can also form part, in particular an integral part, of the cover element 5.

To mount the bracket 4 on the windshield 6 of the vehicle as shown in Figs. 1 to 9, the fixation elements 3 are attached to the windshield 6 at predefined positions, in particular by an adhesive 11 such as a glue or a double-sided adhesive tape etc..

In the first embodiment of the invention fixation pins 12 are used as fixation elements 3. Each fixation pin 12 comprises a base 13, a shaft 14 and a head 15, wherein the shaft 14 has the smallest diameter and the base 13 has the largest diameter or the same diameter as the head 15. The base 13, shaft 14 and head 15 each have, e.g., a circular cross-section. However, the base 13, shaft 14 and head 15 can have any other cross-section depending on the intended use and function.

The base 13 of the fixation pin 12 is attached to the windshield 6, in particular by the adhesive 11 while the head 15 of the fixation pin 12 is received in an opening 16 of a corresponding mounting section 7 of the bracket 4. The adhesive 11 to attach the base 13 of the fixation pin 12 and thus the fixation pin 12 to windshield 6 is shown in Fig. 5.

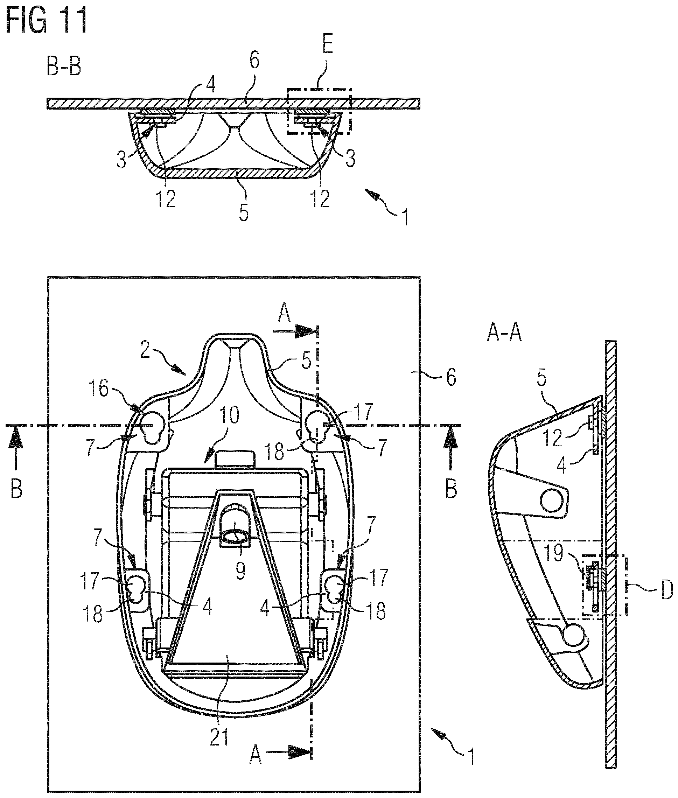

The opening 16 of the mounting section 7 has the form of a keyhole and comprises a first opening section 17 and a second opening section 18 which are connected with each other. The first opening section 17 has, e.g., a circular cross-section, and comprises a diameter which is larger than the diameter of the head 15 of the fixation pin 12 to insert the fixation pin 12 into the first opening section 17. The second opening section 18 has the form of, e.g., a slit or groove but can be also a circular opening as shown in following Fig. 11. In case of a slit as second opening section 18 the width of the slit is smaller than the diameter of the head 15 and larger than the diameter of the shaft 14, so that the fixation pin 12 can be moved with its shaft 14 from the first opening section 17 to the second opening section 18 and the fixation pin 12 cannot fall out of the second opening section 18 as the locking section 8, since the head 15 is larger than the second opening section 18. In this position the fixation pin 12 has reached its end-position or mounting position in which the bracket 4 is mounted on the fixation pin 12. Further, the diameter of the circular base 13 is preferably also larger than the diameter of the first opening section 17 and further in case of a slit preferably larger than the width of the second opening section 18. The dimensioning of the fixation pin 12 and the opening 16 of the mounting section 7 with its first and second opening section 17, 18 applies to all embodiment of the present invention.

In addition at least one of the mounting sections 7 of the bracket 4 can be provided with an additional hook 19 above at the opening 6 of the mounting section 7, e.g., above the second opening section 18. The hook 19 is designed so that it snaps in or clicks into place at the fixation pin 12 and in particular its head 15, when the fixation pin 12 is moved in the second opening section 18 in its end-position or mounting position as shown in Figs. 7 and 8. The hook 19 holds the fixation pin 12 in place and prevents that the fixation pin 12 moves back in direction to the first opening section 17 unintentionally.

As shown in Figs. 1, 3, 6 and 9 the four fixation elements 3, i.e. fixation pins 12, are provided to attach, and in particular to detachably attach, the bracket 4 and thus the cover device 2 to the windshield 6.

The fixation elements 3 have the advantage that a much smaller area is needed on the bracket 4 for the fixation elements 3 and in particular their base 13 than the glue strips used in the prior art. These smaller zones are planar faces and are therefore much easier to be realized according to the nominal CAD data after the injection process.

The present invention describes a new method for fixing the bracket 4 on the fixation elements 3, such as metal and/or plastic fixation pins 12 that are glued on the windshield 6. The main assembly steps are represented in Figs. 1 to 8 each figure representing a separate step of the assembly process. With Fig 9 showing only the bracket normal to the sensor interface 10

The first step is presented in Figs. 1 and 2. The windshield 6 comes preassembled with the fixation elements 3, e.g. metal fixation pins 12, which are fixed on the windshield 6 using an adhesive 11 such as glue or adhesive tape etc.. The metal fixation pins 12 are each composed of three sections as mentioned before, namely the base 13, the shaft 14 and the head 15, each with, e.g., different diameters. The bracket 4 is moved near the windshield 6 to or on the pin axis so that the fixation pins 12 axis are aligned with the first opening section 17 of the corresponding opening 6 of the mounting section 7 of the bracket 4. The upper pin section or head 15 goes through the larger first opening section 17 and the base 13 or the lower section of the fixation pin 12 provides a contact surface with the windshield 6.

The second step is presented in Figs 3 to 5. The bracket 4 is now in contact with the fixation pins 12 and is moved down or in its longitudinal direction so that the upper pin section or head 15 will move into the second opening section 18 of smaller narrower keyhole part of the corresponding mounting section 7 of the bracket 4.

In the example shown in Figs. 1-9, e.g., two of the pin fixing elements, i.e. mounting sections 7, on the bracket 4 also have a hook 19 which is preferably designed of making a clicking sound in order to know for an installer when the bracket 4 reaches its end-position or final mounting position. The fixation pin 12 has to cross under this hook 19 and will make a clicking sound once the hook 19 clips over or snaps in the fixation pin 12.

The third step is presented in Fig 6 to Fig 8 and is the final assembly step. The bracket 4 is fully assembled on the windshield 6. In this final step, the bracket 4 has reached its lowest position, in which the fixation pin 12 is completely under or below the hook 19.

As shown in Fig. 8 in a preferred embodiment of the invention the second opening section 18 of the corresponding mounting section 7 of the bracket 4 can be provided with additional ribs 20 or crash ribs on opposite sides of the shaft 14 of the fixation pin 12. Said ribs 20 are designed to interfere or engage with the corresponding fixation pin 12 to hold the bracket 4 tight in its position, so that the bracket 4 cannot move unintentionally perpendicular to the windshield 6 and away from the windshield 6. In other words, said ribs 20 block movement of the bracket 4 in Z-direction, i.e., the direction perpendicular to the windshield 6.

For an easier fitting of the fixation pins 12 in the opening 6 or keyhole of the corresponding mounting section 7, the bracket 4 can be provided in a preferred embodiment with a drafted cone-like surface for easier alignment of the bracket 4 on the fixation pins 12. In other words, the first opening section 17 and/or the second opening section 18 has or have a conical shape or conically shaped side-walls.

As mentioned before, since the head 15 or upper section of the fixation pin 12 has a larger diameter or is larger than the narrow part or first opening section 17 of the opening 6 or keyhole of the bracket 4, the bracket 4 cannot fall off the fixation pin 12 due to the larger head 15 of the fixation pin 12.

Fig. 9 shows a top view of the bracket 4 with a representation of all, e.g. four, fixation pins 12 to which is referred to as P1 to P4. Each fixation pin P1 to P4 can be provided with its own geometrical shape in order to block the degrees of freedom. Fixation pin P1 blocks Z-direction while allowing some movement in X-direction and Y-direction. Fixation pin P2 completely blocks both Z-direction and Y-direction. Fixation pin P3 allows some movement in X-direction and Y-direction while blocking movement in Z-direction. Further, fixation pin P4 completely blocks movement in all directions, i.e. X-,Y- and Z-direction. Z-direction corresponds to the direction perpendicular to the bracket. The X-direction is the longitudinal direction (up-down) of the bracket and the Y-direction is the transverse direction (left-right) of the bracket.

The embodiment shown in Figs. 1-9 has the advantage that the holding force of the bracket 4 on the windshield 6 can be increased in contrast to the prior art in which glue is used to fix the bracket to the windshield. Further, according to the invention it is possible to manually assemble the bracket 4 on the windshield 6 and further too manually disassemble the bracket 4 from the windshield 6. Furthermore, according to the invention smaller contact surfaces are required which allows for smaller brackets areas needed in comparison to the fixing method used in the prior art in which a large bottom area of the bracket has to be attached to the windshield with glue or a double-sided adhesive. A further advantage of the invention is that the bracket 4 can be manufactured at lower costs, e.g. as a plastic bracket, since only small areas on the bracket need to be precise. These small contact areas are easier to control from a dimensional point of view and their dimensional control is further also easier to manufacture because they are simple planar (or flat) surfaces. Since the bracket 4 can be easily detached from the windshield 6, it is possible to replace the bracket, e.g., in case of maintenance, without needing to change the entire windshield.

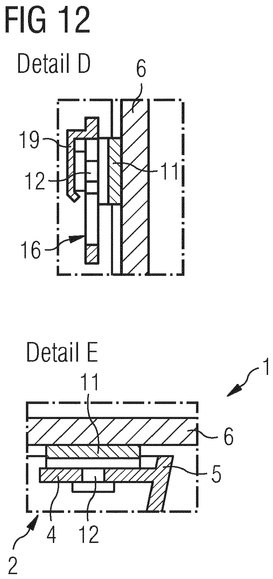

Figs. 10 to 12 illustrate a second embodiment of the attachment system 1 according to the invention, wherein the attachment system 1 comprises a cover device 2 and, e.g., four fixation elements 3. The cover device 2 comprises a bracket 4 and a cover element 5. In Fig. 10 a perspective view of the cover device 2 and the fixation elements 3 is shown, before the cover device 2 is attached to a windshield 6 of a vehicle. Further, Fig. 11 shows a front view of the cover device 2 according to Fig. 10 and two sectional views A-A and B-B thereof. In Fig. 12 two details D and E of Fig. 11 are shown.

Basically the second embodiment of the invention corresponds to the first embodiment of the invention so that reference is made in this connection to the description of the first embodiment to avoid unnecessary repetitions. Further, the second embodiment differs from the first embodiment of the invention in the following.

According to the second embodiment the bracket 4 is integrated in the cover element 5 and forms an integral part of the cover element 5. The mounting sections 7 of the bracket 4 to mount the attachment system 1 to a windshield 6 is formed as part of the cover element 5 as shown in Figs. 10 according to the second embodiment. Moreover, the attachment of electronic components 9 on the bracket 4 is moved to or integrated in the cover element 5 according to the second embodiment. Therefore the interface for corresponding electronic components 9 is integrated in the cover element 5.

The interface of the bracket 4 to receive an electronic component 9 can comprise a receiving and holding section 10 for at least one electronic component 9 to receive and hold the at least one electronic component 9.

The cover element 5 according to the second embodiment of the invention is therefore not only a beauty case but also a functional case regarding the attachment of one or more electronic components 9 and further regarding the attachment to a windshield 6 of a vehicle with the fixation elements 3.

As described before with respect to Figs. 1 to 9 each mounting section 7 comprises an opening 6 to receive a fixation element 3, i.e. a fixation pin 12, as also shown in Figs. 10 to 13. The opening 6 or keyhole of the mounting section 7 comprises the first opening section 17 and the second opening section 18 as described before with respect to Figs. 1 to 9.

In the embodiment shown in Fig. 10 the first opening section 17 is a circular opening and the second opening section 18 is a slit or groove as also shown and described before with respect to Figs. 1 to 9. On the other hand in the embodiment shown in Fig. 11, the second opening section 18 can be also a circular opening instead of a slit or groove. In both cases as shown in Figs. 10 and 11 the diameter or width in case of a slit of the second opening section 18 is smaller than the opening of the first opening section 17 but large enough to allow that the fixation pin 12 can be moved with its shaft 14 from the first opening section 17 to its end position or mounting position in the second opening section 18 forming the locking section 8. This applies to all embodiments of the invention. With its base 13 the fixation pin 12 is attached to the windshield 6 by using an adhesive 11 such as glue or a double sided adhesive strip, this applies to all embodiments of the invention.

Further, in the second embodiment as shown in Figs. 11 and 12, at least one mounting section 7 can be provided with an additional hook 19 as described before with respect to Figs. 1 to 9, therefore reference is made to the description in Figs. 1 to 9 to avoid unnecessary repetitions. Since this hook 19 is part of the bracket 4 and the bracket 4 forms part of the cover element 5, the hook 19 is part of or integrated in the cover element 5.

Because the bracket 4 is integrated in the cover element 5 so that the bracket 4 and the cover element 5 form one part according to the second embodiment of the invention the number of components can be reduced.

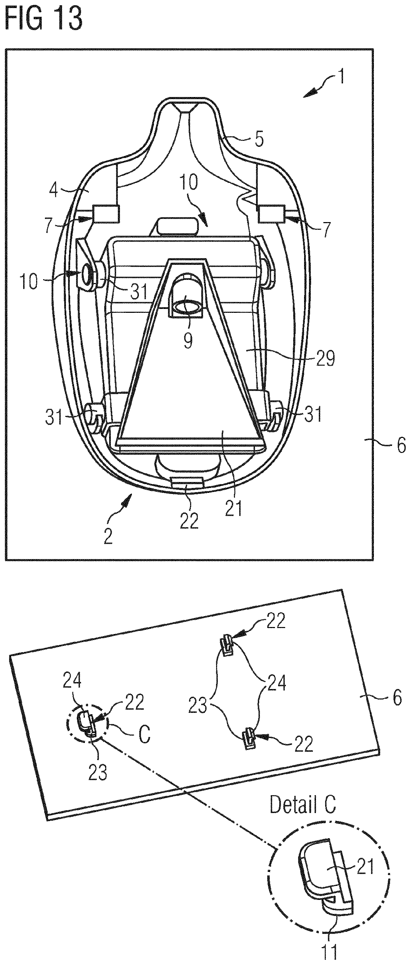

In other words, the custom design bracket is replaced with a functional beauty cover. More specifically, it means that all features from the bracket 4 are moved on or integrated in the cover element 5 to provide a functional beauty cover. Gluing surface will move from the bracket 5 to the fixation elements 3 such as, e.g., the fixation pins 12 as shown in Figs. 1, 2, 4, 5, 7, 8, 10 and 12 or fixation snappers or clips as will be described below with respect to following Figs. 13, 14 and 15.

The functional beauty cover method consists of functional features such as fixation and masking or covering which are part of the beauty cover structure of the cover element 5.

To assemble the attachment system 1 according to the second embodiment of the invention with its cover device 2 and electronic components 9, such as sensors etc., the following exemplary assembly steps can be carried out.

In a first step an electronic component 9, such as, e.g., a sensor, is mounted in a corresponding receiving and holding section 10 of the cover element 5 serving also as beauty cover. As described before, the cover element 5 provides as an example of a fixation feature, the receiving and holding section 10 to receive and hold at least one electronic component 10. However, any other fixation feature can be provided to receive and fix at least one electronic component 9 such as a sensor etc. to the cover element 5. The invention is not restricted to the receiving and holding section 10 as shown and described.

In a further step the fixation pins 12 of the attachment system 1 are fixed on the windshield 6 using an adhesive 11 such as a glue or a double-sided adhesive etc. as shown in Figs. 10, 11 and 12.

Further, in a subsequent step, the complete assembly system 1, namely the cover element 5 with its integrated bracket 4 and the electronic component(s) 9 fixed to the cover element 5, is attached to the windshield 6 with its corresponding fixation pins 12 adhered to the windshield 6 of the vehicle. The attachment of the assembly system 1 of the second embodiment of the invention on the windshield 6 is based on the cover fixation features, namely the mounting sections 7 of the bracket 4 integrated in the cover element 5. The cover element 5 therefore provides not only a beauty cover structure but a functional beauty cover structure.

Further, in the example of the second embodiment of the present invention as illustrated in Figs. 10 to 12, the cover device 2 can further comprise one or more additional cover device components such as an additional cover part, which can be preassembled on the electronic component 9, e.g. a sensor or camera, such as a stray light cover 21. However, the invention neither limited to additional elements such as a cover part nor to a stray light cover 21 as cover device component. Such additional cover device components can be any kind of components the attachment system 1 requires depending on its function and intended use.

The design or form of the cover fixation feature, namely the bracket 4 with its mounting sections 7 integrated in the cover element 5, and the fixation pins 12 as fixation elements 3 can vary as long as the clip in concept provided by the hook 19 as described before with respect to Figs. 1 to 9 is maintained. According to the clip in concept as described before at least one of the mounting sections 7 is provided with the additional hook 19 which snaps in the fixation pin 12, when the fixation pin 12 has reached the mounting position in the second opening section 18 of the opening 6 of the mounting section 7.

In an alternative of the second embodiment of the invention as shown in Figs. 13 to 15 the attachment system 1 comprises as fixation elements 3 fixation clips 22 or snappers instead of fixation pins 12 as shown before in Figs. 10 to 12. In the following the term fixation clip 22 is used. However, the term fixation snapper can be used instead.

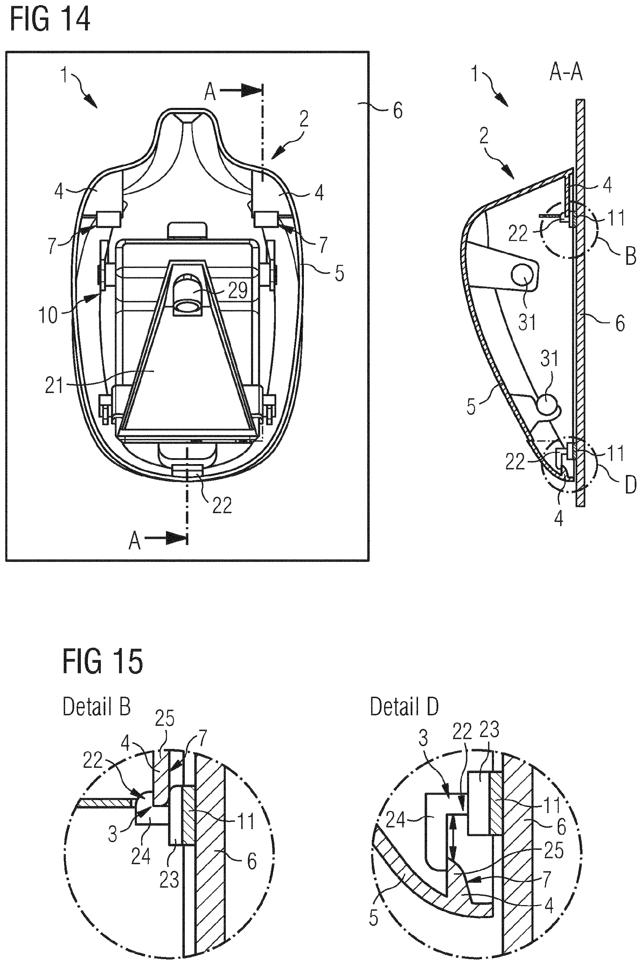

Fig. 13 shows a perspective view of the cover device 2 and the fixation elements 3, i.e. the fixation clips 22, before the cover device 2 is attached to the windshield 6 of a vehicle. Further, Fig. 14 shows a front view of the cover device 2 according to Fig. 13 and a sectional view A-A thereof. In Fig. 15 further two details D and B of Fig. 14 are shown, illustrating the connection between the cover element 5 and its fixation clip 22 attached to a windshield 6.

Each fixation clip 22 comprises a base 23 and a hook portion 24. The base 23 of the fixation clip 22 corresponds to the base 13 of the corresponding fixation pin 12 as described before. The fixation clip 22 is attached with its base 23 to a windshield 6 of a vehicle by an adhesive 11 such as glue or a double-sided adhesive tape as shown in Figs. 14 and 15 provided between the base 23 and the windshield 6. The bracket 4 with its mounting sections 7 and with its receiving and holding sections 10 is also integrated in the cover element 5 to provide the cover element 5 with a functional beauty cover structure as described before.

According to the alternative example of the second embodiment of the present invention as shown in Figs. 13 to 15, the mounting sections 7 formed as part of the cover element 5 and the hook portions 24 of the corresponding fixation clips 22 are designed so that a snap-fit can be provided between the fixation clip 22 and the corresponding mounting section 7 to attach the cover device 2 to the windshield 6.

As shown in detail B in Figs. 14 and 15, at least one fixation clip 22 can be provided with a hook portion 23 which is designed so that the hook portion 24 snaps over the corresponding mounting section 7 comprising e.g., a plate-shaped portion of the cover device 2, e.g. of the cover element 5, as shown in Figs. 14 and 15. The hook portion 24 can be additionally designed not only to snap over the plate-shaped portion but clamp or wedge the plate-shaped portion between its hook portion 24 and its base 23. As shown in the example in Figs. 14 and 15, the hook portion 24, e.g., does not extend beyond its base 23. Two of such fixation clips 22 can be provided as shown in Figs. 14 and 15 and positioned on the windshield 6 so that each of them snaps over the corresponding plate-shaped portion of the cover element 5, when the cover element 5 reaches its mounting position on the fixation clips 22 after have been moved along the windshield 6 in direction to the fixation clips 22 and between the hook portion 24 and its base 23.

Further, as shown in detail D in Figs. 14 and 15, at least one mounting section 7 can be also designed as a protrusion 25 protruding from the inner wall of the cover element 5, so that the hook portion 24 of its corresponding fixation clip 22 snaps over the protrusion 25, when the end of the cover element 5 is moved in its mounting position in which the protrusion 25 snaps on the hook portion 24. The hook portion 24 of the fixation clip 22 can be therefore elongated and extend beyond its base 23 as best shown in detail D in Fig. 15. Furthermore, the hook portion 24 and the protrusion 25 can be provided with an additional rounded edge portion to facilitate snapping over the hook portion 24 of the fixation clip 22 as shown in detail D in Fig. 15. Moreover, a play or gap as indicated with a double arrow between the front end of the protrusion 25 and the hook portion 25 can be provided as best shown in detail D of Fig. 15, for tolerance compensation and/or to facilitate mounting of the cover element 5 on the windshield 6.

Said fixation clip 22 as shown in detail D is positioned on one end of the cover element 5 while the two other fixation clips 22 as shown in detail B are positioned, e.g., at the other or opposite end of the cover element 5 as shown in Fig. 13. Further, the hook portions 24 of the fixation clips 22 of detail B face in the opposite direction in Fig. 13 as the hook portion 24 of the fixation clip 22 of detail D when attached in the mounting position on the windshield 6.

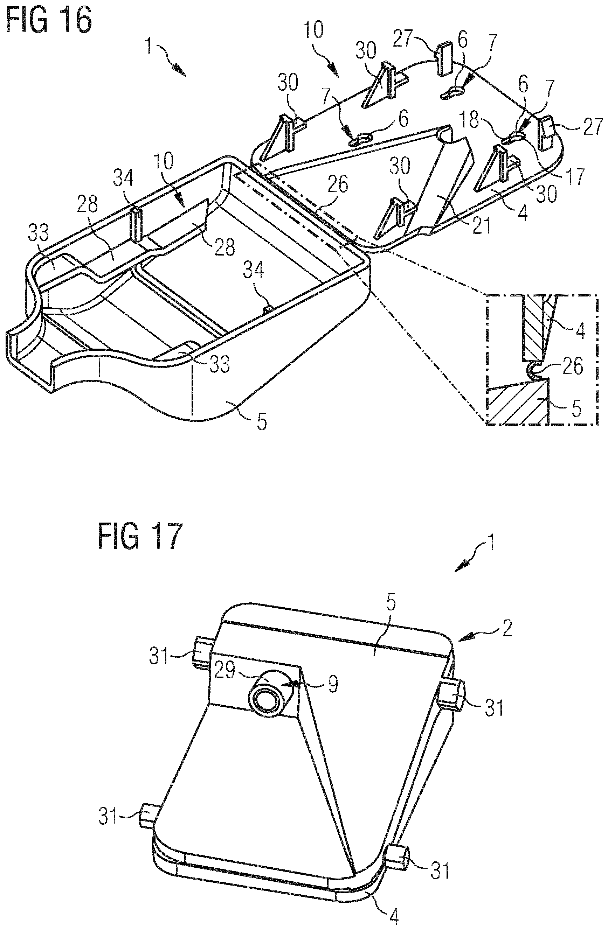

Figs. 16 to 21 illustrate a third embodiment of the attachment system 1 according to the invention, wherein the attachment system 1 comprises a cover device 2 and, e.g., three fixation pins 12 as fixation elements 3. As mentioned before, the cover device 2 comprises a cover element 5 and a bracket 4, which comprises mounting sections 7 to be mounted on the fixation elements adhered to a windshield 6 of a vehicle.

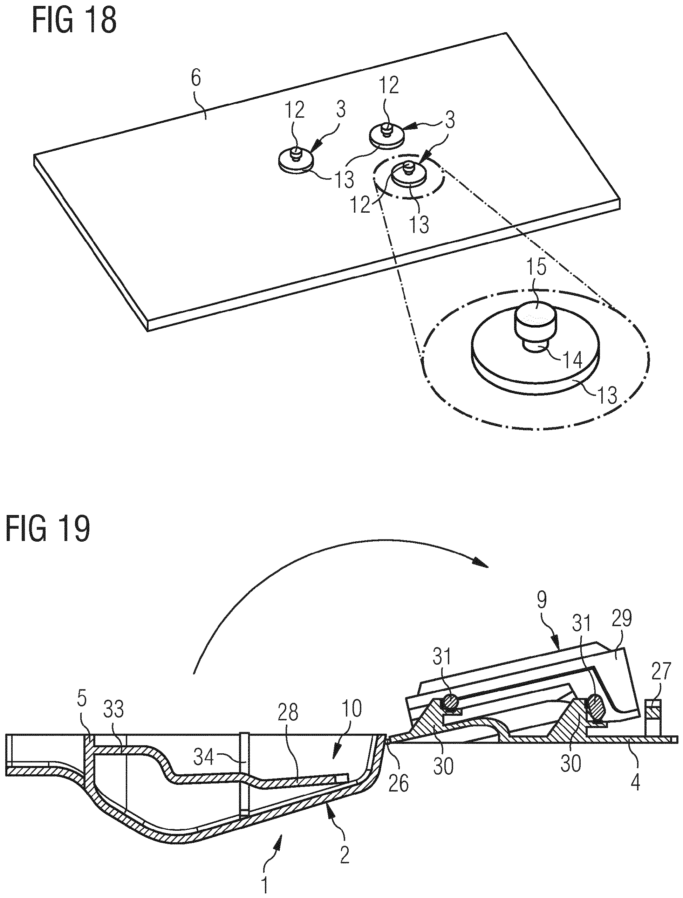

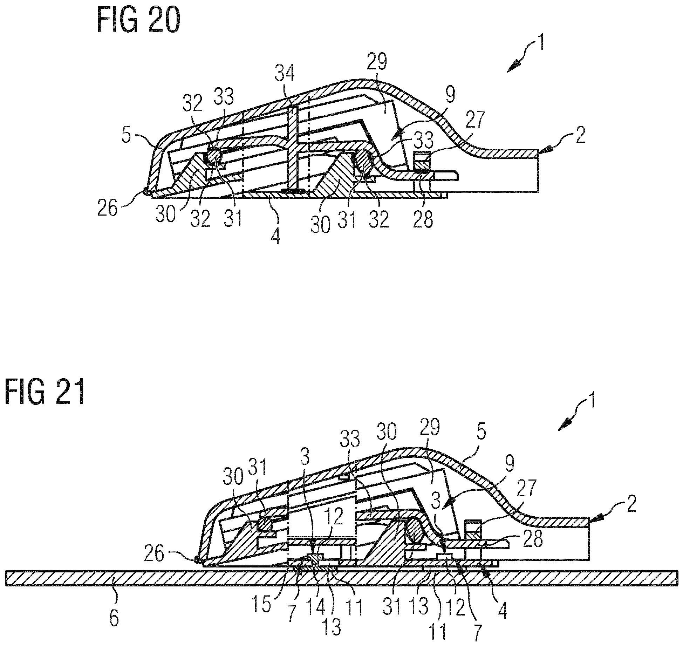

According to the third embodiment of the invention the cover element 5 and the bracket 4 are rotatably connected to each other by at least one hinge 26, so that the cover element 5 can be rotated around the at least on hinge 26 from an open position in which the cover device 2 is open as shown in the perspective view of the cover device 2 in Fig. 16 to a closed position as shown in the perspective view of the cover device 2 in Fig. 17 in which the cover device 2 is closed. In Fig. 18 a further perspective view of the attachment system 1 according to Figs. 16 and 17 is shown. In Fig. 18 a perspective view of a windshield 6 is disclosed, on which corresponding fixation elements 3 of the attachment system 1 of the third embodiment are attached to mount the cover device 2 shown in Figs. 16 and 17 on the windshield 6. Further, in Fig. 19 the cover device is shown in an open position and in Figs. 20 and 21 in a closed position, wherein in the cross-sectional view in Fig. 21 one of the fixation elements is shown.

The third embodiment of the invention corresponds essentially with the first embodiment of the invention so that reference is made in this connection to the description of the first embodiment to avoid unnecessary repetitions. As well as the first embodiment, the bracket 4 of the attachment system 1 of the third embodiment comprises mounting sections 7 to mount the bracket 4 and thus the cover device 2 on the fixation elements 3, e.g. fixation pins 12 as in Figs. 1-12 and 16-21 or fixation clips as shown in Figs. 13-15.

The third embodiment differs from the first embodiment of the invention in that the cover element 5 and the bracket 4 of the third embodiment are rotatable connected by at least one hinge 26 or elastic connecting portion connected the bracket 4 and the cover element 5. The cover element 5 and the bracket 4 of the third embodiment form a bracket-cover element, wherein the bracket 4 or preferably the cover element 5 of the bracket-cover element can be rotated around the at least on hinge from an open position in which the cover device 2 is open and accessible to a closed position, in which the cover device 2 is closed.

Further, the bracket 4 according to the third embodiment is provided with at least one or as shown in Fig. 16, e.g., two or more latching means 27. Each latching means 27 is designed lock in place on the cover element 5, when the cover element 5 is rotated in the closed position as shown in Fig. 21. The cover element 5 is therefore provided inside with a corresponding first wall portion 28 which protrudes from the inner wall of the cover element 5 and is designed so that the corresponding latching means 27 snap on or lock in place on said first wall portion 28 protruding for the inner wall of the cover element 5.

Furthermore, the bracket 4 is provided with an interface for electronic components 9 such as a camera 29 shown in Figs. 19 to 21. As a receiving and holding section 10 the bracket 4 comprises in the example of the third embodiment as shown in Figs. 16-21, e.g., four receiving means 30. Each receiving means 30 is designed to receive a corresponding fixation means 31 of the electronic component 9 to be mounted on the bracket 4, such as for example a bolt portion of the camera 29 as one example of an electronic component 9 as shown in Figs. 17, 19, 20 and 21. The fixation means 31 can be optionally further fastened to the receiving means 30 by an adhesive 11 as an example of a fastening means 32 and/or any other suitable fastening means. Not shown, receiving means 30 can be also designed to engage with or snap on the fixation means 31, e.g. the bolt portion of the camera 29. However, the invention is not restricted to these examples of the receiving and holding section 10 or to a camera 29 as an electronic component 9 or bolt portions as fixation means 31 of the electronic component 9 etc..

After the camera 29 shown in Fig. 19 is received in the receiving means 30 of the receiving and holding section 10 of the bracket 4 and if required additionally fastened to at least one of the receiving means 30 by using, e.g., an adhesive as a fastening means 32, the bracket 4 and the camera 29 mounted thereon can be rotated from the open position of the cover device 2 in Fig. 19 to the closed position as shown in Figs. 20 and 21.

In a further embodiment of the invention, the cover element 5 can be provided inside with an additional second wall portion 33 which protrudes from the inner wall of the cover element 5 along the cover element 5 or along the longitudinal direction of the cover element 5. The second wall portion 33 is positioned and designed to hold down a corresponding fixation means 31, such as the bolt portion, of the camera 29. If desired, the second wall portion 33 and the corresponding receiving means 30 can be further designed to additional clamp the corresponding fixation means between the second wall portion 33 and the receiving means 30. Moreover, the cover element 5 can be provided inside with a first wall portion 28 and the second wall portion 33 on two opposite sides as shown in Fig. 16. Moreover, the first wall portion 28 and the second wall portion 33 can be formed on each side of the cover element 5 as one wall portion as shown in Fig. 16 or as two separate wall portions which is not shown in the figures.

Furthermore, the cover element 5 can be provided inside with a third wall portion 34 which protrudes from the inner wall of the cover element 5 similar as the first and second wall portion 28 and 33 but not in the longitudinal direction as the first and second wall portion 28 and 33 but in vertical direction from top to the bottom of the cover element until it reaches the bracket 4 as shown in Fig. 20. If desired the third wall portion 34 can be additionally fixed to the bracket 4 by an adhesive 11 as a fastening means 32 as shown in Fig. 20. However, any other fastening means 32 can be used in addition to the adhesive 11 or instead of the adhesive 11. The mounting of the camera 29 as an example of an electronic component 9 in the bracket 4 is further carried out as follows:
The bracket-cover element is only one plastic component, since the bracket 4 and the cover element 5 together form a single part. The bracket-cover element comprises as described before two parts which are pivotably connected with each other, namely the cover element 5 forming the beauty-cover and the bracket 4. These two parts of the bracket-cover element are connected, in particular pivotably connected with each other via an elastic link element, i.e. at least one hinge 26.

The bracket 4 is provided with an interface for at least one electronic component 9. The interface of the bracket 4 comprises a receiving and holding section 10 for at least one electronic component 9 to receive and hold the at least one electronic component, in the present case the camera 29.

Further, the bracket 4 of the bracket-cover element comprises mounting sections 7 as described before and as shown in the sectional view of Fig. 21 to mount the bracket and thus the cover device 2 to the fixation elements 3, e.g. fixation pins 12, on the windshield 6 of a vehicle.

Moreover, the bracket 4 comprises bracket-sensor fitting elements, i.e. the receiving and holdings sections 10 with its receiving means 30, and elements, i.e. latching means 27, to fix the bracket 4 to the cover element 5 when the cover element 5 is pivoted in the closed position in which it is attached to the bracket 4 so that the cover device 2 is closed as shown in Figs. 20 and 21.

On the side of the cover element 5, i.e., the beauty cover side, elements, i.e., first end second wall portions 28 and 33, for sensor fixing and also elements, i.e., latching means 27 or cover-fixing elements and third wall portions 34 or cover-bracket holding elements, for fixing and holding the bracket 4 are provided.

The camera 29 as an example of a sensor comprises a camera body 35, camera fixing features, i.e. fixation means 31 such as, e.g., bolt portions etc. used for positioning and fixing the camera 29 in the bracket-cover element, and a camera lens 36.

The bracket-cover elements and the camera 29 are mounted on the windshield 6 using for example fixation pins 12 as fixation elements 3. Said fixation pins 12 can be mounted on the windshield 6 with an adhesive 11 such as double adhesive tape or glue as shown in 18.

The steps of mounting the camera 29 into the bracket-cover element comprise mounting the camera 29 on the receiving and holding section 10 of the bracket 4. In this case all, e.g., four camera fixing features, i.e. fixation means 31, namely bolt portions, will get in contact with bracket sensor fixing elements, i.e. the receiving means 30 of the receiving and holding section 10. The fixation means 30 can additionally be fastened to the receiving means 30 e.g. by an adhesive etc..

In a next step the cover element 5 closes the interior of the cover device 2 or in other words the beauty cover side is positioned onto the bracket body side. This is possible with a rotation of the cover element 5 onto the bracket as indicated by an arrow in Fig. 19 and as shown in Figs. 20 and 21. This rotation is possible because of the elastic element or hinge connection. After finishing the rotation of the beauty cover side, i.e. cover element 5, the cover-sensor fixing elements, i.e., first wall portions 27, together with the bracket sensor fixing elements, i.e. the receiving and holding section 10 and its receiving means 30, ensure good fixing and positioning of the camera 29. Additionally, the bracket-cover fixing elements, i.e., latching means 27 get in contact with the cover- fixing elements, i.e., second wall portions 33 and ensure a fix and closed position of the inventive assembly system 1 as shown in Figs. 20 and 21.

In the last step to assemble the bracket-cover element and the camera 29 on the windshield 6, the cover device 2 with the camera 29 inside is simply attaching and/or clipped-in on the fixation pins 12 using bracket slots, i.e., openings 6 of the mounting section 7, for fixedly connecting the fixation pins 12 and the cover device 2 of the inventive attachment system 1 as shown in Fig. 21.

An advantage of embodiments of the inventive attachment system is that only one component can be provided instead of a plurality of separate components namely a bracket, a stray light cover, metallic springs and a beauty cover. In this way, the costs and the time for the development and production are improved mainly because instead of having two or more parts to be assembled and produced now one has only one part. Only one molding tool and only one plastic material will be used, these generate also simplicity in all the process like manufacturing and assembly.

Another advantage is that the fixing process between fixation elements and windshield is very easy to be implemented and can be used by all windshield suppliers as well as OEM's. The fixation elements are very similar to the rear mirror foot, which means that the windshield suppliers are familiar to handle them, i.e., glue and align them. The fixation elements can be reused for different packaging conditions independent of the windshield curve and inclination.

Another advantage is that complete assembly, i.e., bracket-cover and camera, will be delivered to OEM's and they will need to have on the production line only one step to mount it on the windshield. No other additional steps are required, like mounting the bracket on the windshield and after that mounting the camera in the bracket and at the end mounting the beauty cover.

Another major advantage is that the complete assembly, i.e. bracket-cover and sensor, can be easily replaced without significant cost, if this is necessary.

### LIST OF REFERENCE NUMERALS

- 1: attachment system
- 2: cover device
- 3: fixation element
- 4: bracket
- 5: cover element
- 6: windshield
- 7: mounting section
- 8: locking section
- 9: electronic component
- 10: receiving and holding section
- 11: adhesive
- 12: fixation pins
- 13: base
- 14: shaft
- 15: head
- 16: opening (mounting section
- 17: first opening section
- 18: second opening section
- 19: hook
- 20: rib
- 21: stray light cover
- 22: fixation clip
- 23: base
- 24: hook portion
- 25: protrusion
- 26: hinge
- 27: latching means
- 28: first wall portion
- 29: camera
- 30: receiving means
- 31: fixation means
- 32: fastening means
- 33: second wall portion
- 34: third wall portion

## Claims

1. An attachment system (1) for attaching at least one electronic component (9) on a windshield (6) of a vehicle, wherein the attachment system (1) comprises:
fixation elements (3), wherein each fixation element (3) comprises a base (13, 23) and a top portion (15, 24), wherein the fixation element (3) is fixable with its base (13, 23) on the windshield by an adhesive; and
a cover device (2) including the at least one electronic component (9), wherein the cover device (2) comprises a cover element (5) and further a bracket (4), wherein bracket (4) comprises mounting sections (7) which are designed to engage with the top portion (15, 24) of a corresponding fixation element (3) to mount the cover device (2) on the windshield (6), wherein the mounting section (7) comprises an opening (16), wherein the opening (16) comprises a first opening section (17) to receive the corresponding fixation element (3) and a second opening section (18) to hold the fixation element (3) in a mounting position.

2. Attachment system according to claim 1, wherein the bracket (4) and the cover element (5) form two separate parts, wherein the cover element (5) is preferably releasable attachable to the bracket (4), in particular before and/or after the bracket (4) is mounted on the windshield (6).

3. Attachment system according to claim 1, wherein the bracket (4) is integrated into the cover element (5), wherein preferably the mounting sections (7) of the bracket (4) are integrated into the cover element (5), wherein the mounting sections (7) of the bracket (4) and the cover element (5) preferably form one part.

4. Attachment system according to claim 1, wherein the bracket (4) and the cover element (5) are pivotable connected with each other, preferably by at least one hinge (26), wherein the cover element (5) is pivotable around the bracket (4) in a position in which the cover device (2) is closed and a position in which the cover device (2) is open and preferably accessible.

5. Attachment system according to any one of the preceding claims, wherein the bracket (4) and/or the cover element (5) comprise at least one receiving and holding section (10) to receive and hold the at least one electronic component (9), wherein the electronic component (9) is in particular a sensor, such as a rain sensor, temperature sensor, light sensor or a camera (29).

6. Attachment system according to any one of the preceding claims, wherein at least one mounting section (7) comprises an additional hook (19) to snap over the fixation element (3), when the fixation element (3) has reached its mounting position at the mounting section.

7. Attachment system according to any one of the preceding claims, wherein the bracket (4) comprises at least one latching means (27) which is designed to lock in place on the cover element (5), wherein the cover element (5) is preferably provided with a corresponding first wall portion (28) which protrudes from an inner wall of the cover element (5) and is designed so that the latching means (27) lock in place on said first wall portion (28).

8. Attachment system according to any one of the preceding claims, wherein the receiving and holding section (10) of the bracket (4) comprises receiving means (30) to receive the at least one electronic component (9), wherein the receiving means (30) are designed to receive a corresponding fixation means (31) of the electronic component (9) to be mounted on the bracket (4), wherein the cover element (5) comprises preferably a second wall portion (33) which protrudes from the inner wall of the cover element (5) and is positioned and designed to hold down the corresponding fixation means (31) of the electronic component (9), when the cover device (2) is closed.

9. Attachment system according to any one of the preceding claims, wherein the cover element (5) comprises a third wall portion (34) which protrudes from the inner wall of the cover element (5) in a vertical direction and contacts the bracket (4), when the cover device (2) is closed.

10. Attachment system according to any one of the preceding claims, wherein the cover device (2) comprises a stray light cover (21), wherein the stray light cover (21) is integrated in the cover element (5) or the bracket (4) or wherein the stray light cover (21) forms a separate part which is designed to be attachable to a camera (29) as electronic component (9), to be attachable to the bracket (4) and/or to be attachable to the cover element (5).

11. Attachment system according to any one of the preceding claims, wherein the fixation element (3) is a fixation pin (12), wherein the top portion of the fixation pin (12) is a head (15) which is connected to the base (13) by a shaft (14).

12. Attachment system according to claim 11, wherein the mounting section (7) is provided with additional ribs (20) which are designed to engage with the corresponding fixation pin (12) to hold the bracket (4) in its position.

13. Attachment system according to any of claims 1 to 10, wherein the fixation element (3) is a fixation clip (22), wherein the top portion of the fixation clip (22) is a hook portion (24) designed to snap over a corresponding mounting section (7) of the bracket (4).

## Patentansprüche

1. Befestigungssystem (1) zum Befestigen mindestens eines elektronischen Bauteiles (9) auf einer Windschutzscheibe (6) eines Fahrzeuges, wobei das Befestigungssystem (1) umfasst:
Befestigungselemente (3), wobei jedes Befestigungselement (3) eine Basis (13, 23) und einen oberen Abschnitt (15, 24) umfasst, wobei das Befestigungselement (3) mit seiner Basis (13, 23) mittels eines Klebers auf der Windschutzscheibe befestigbar ist; und
eine Abdeckvorrichtung (2), die das mindestens eine elektronische Bauteil (9) enthält, wobei die Abdeckvorrichtung (2) ein Abdeckelement (5) und ferner eine Halterung (4) umfasst, wobei die Halterung (4) Montageabschnitte (7) umfasst, die so ausgestaltet sind, dass sie in den oberen Abschnitt (15, 24) eines entsprechenden Befestigungselementes (3) eingreifen, um die Abdeckvorrichtung (2) auf der Windschutzscheibe (6) zu montieren, **dadurch gekennzeichnet, dass** der Montageabschnitt (7) eine Öffnung (16) umfasst, wobei die Öffnung (16) einen ersten Öffnungsabschnitt (17), um das entsprechende Befestigungselement (3) aufzunehmen, und einen zweiten Öffnungsabschnitt (18), um das Befestigungselement (3) in einer Montagestellung zu halten, umfasst.

2. Befestigungssystem nach Anspruch 1, wobei die Halterung (4) und das Abdeckelement (5) zwei getrennte Teile bilden, wobei das Abdeckelement (5) vorzugsweise lösbar an der Halterung (4) befestigbar ist, insbesondere vor und/oder nach der Montage der Halterung (4) auf der Windschutzscheibe (6).

3. Befestigungssystem nach Anspruch 1, wobei die Halterung (4) in das Abdeckelement (5) integriert ist, wobei vorzugsweise die Montageabschnitte (7) der Halterung (4) in das Abdeckelement (5) integriert sind, wobei die Montageabschnitte (7) der Halterung (4) und das Abdeckelement (5) vorzugsweise ein Teil bilden.

4. Befestigungssystem nach Anspruch 1, wobei die Halterung (4) und das Abdeckelement (5) schwenkbar miteinander verbunden sind, vorzugsweise durch mindestens ein Scharnier (26), wobei das Abdeckelement (5) um die Halterung (4) schwenkbar ist in eine Stellung, in der die Abdeckvorrichtung (2) geschlossen ist, und eine Stellung, in der die Abdeckvorrichtung (2) offen und vorzugsweise zugänglich ist.

5. Befestigungssystem nach einem der vorangehenden Ansprüche, wobei die Halterung (4) und/oder das Abdeckelement (5) mindestens einen Aufnahme- und Halteabschnitt (10) umfassen, um das mindestens eine elektronische Bauteil (9) aufzunehmen und zu halten, wobei das elektronische Bauteil (9) insbesondere ein Sensor, zum Beispiel ein Regensensor, Temperatursensor, Lichtsensor oder eine Kamera (29) ist.

6. Befestigungssystem nach einem der vorangehenden Ansprüche, wobei mindestens ein Montageabschnitt (7) einen zusätzlichen Haken (19) umfasst, um über dem Befestigungselement (3) einzuschnappen, wenn das Befestigungselement (3) seine Montagestellung an dem Montageabschnitt erreicht hat.

7. Befestigungssystem nach einem der vorangehenden Ansprüche, wobei die Halterung (4) mindestens ein Verriegelungsmittel (27) umfasst, das so ausgestaltet ist, dass es auf dem Abdeckelement (5) einrastet, wobei das Abdeckelement (5) vorzugsweise mit einem entsprechenden ersten Wandabschnitt (28) versehen ist, der von einer Innenwand des Abdeckelementes (5) vorspringt und so ausgestaltet ist, dass die Verriegelungsmittel (27) auf dem ersten Wandabschnitt (28) einrasten.

8. Befestigungssystem nach einem der vorangehenden Ansprüche, wobei der Aufnahme- und Halteabschnitt (10) der Halterung (4) Aufnahmemittel (30) umfasst, um das mindestens eine elektronische Bauteil (9) aufzunehmen, wobei die Aufnahmemittel (30) so ausgestaltet sind, dass sie ein entsprechendes Befestigungsmittel (31) des auf der Halterung (4) zu montierenden elektronischen Bauteiles (9) aufnehmen, wobei das Abdeckelement (5) vorzugsweise einen zweiten Wandabschnitt (33) umfasst, der von der Innenwand des Abdeckelementes (5) vorspringt und so positioniert und ausgestaltet ist, dass er das entsprechende Befestigungsmittel (31) des elektronischen Bauteiles (9) unten hält, wenn die Abdeckvorrichtung (2) geschlossen ist.

9. Befestigungssystem nach einem der vorangehenden Ansprüche, wobei das Abdeckelement (5) einen dritten Wandabschnitt (34) umfasst, der von der Innenwand des Abdeckelementes (5) in einer senkrechten Richtung vorspringt und die Halterung (4) berührt, wenn die Abdeckvorrichtung (2) geschlossen ist.

10. Befestigungssystem nach einem der vorangehenden Ansprüche, wobei die Abdeckvorrichtung (2) eine Streulichtabdeckung (21) umfasst, wobei die Streulichtabdeckung (21) in dem Abdeckelement (5) oder der Halterung (4) integriert ist oder wobei die Streulichtabdeckung (21) ein getrenntes Teil bildet, das so ausgestaltet ist, dass es an einer Kamera (29) als elektronisches Bauteil (9) befestigbar ist, an der Halterung (4) befestigbar ist und/oder an dem Abdeckelement (5) befestigbar ist.

11. Befestigungssystem nach einem der vorangehenden Ansprüche, wobei das Befestigungselement (3) ein Befestigungsstift (12) ist, wobei der obere Abschnitt des Befestigungsstiftes (12) ein Kopf (15) ist, der mittels eines Schaftes (14) mit der Basis (13) verbunden ist.

12. Befestigungssystem nach Anspruch 11, wobei der Montageabschnitt (7) mit zusätzlichen Rippen (20) versehen ist, die so ausgestaltet sind, dass sie in den entsprechenden Befestigungsstift (12) eingreifen, um die Halterung (4) in ihrer Stellung zu halten.

13. Befestigungssystem nach einem der Ansprüche 1 bis 10, wobei das Befestigungselement (3) eine Befestigungsklammer (22) ist, wobei der obere Abschnitt der Befestigungsklammer (22) ein Hakenabschnitt (24) ist, der so ausgestaltet ist, dass er über einem entsprechenden Montageabschnitt (7) der Halterung (4) einschnappt.

## Revendications

1. Système de fixation (1) destiné à la fixation d'au moins un composant électronique (9) sur un pare-brise (6) d'un véhicule, le système de fixation (1) comprenant :
des éléments de fixation (3), chaque élément de fixation (3) comprenant une base (13, 23) et une partie supérieure (15, 24), l'élément de fixation (3) pouvant être fixé avec sa base (13, 23) sur le pare-brise par un adhésif ; et
un dispositif de recouvrement (2) comportant l'au moins un composant électronique (9), le dispositif de recouvrement (2) comprenant un élément de recouvrement (5) et en outre un support (4), le support (4) comprenant des portions de montage (7) qui sont conçues pour venir en prise avec la partie supérieure (15, 24) d'un élément de fixation (3) correspondant pour monter le dispositif de recouvrement (2) sur le pare-brise (6), **caractérisé en ce que** la portion de montage (7) comprend une ouverture (16),
l'ouverture (16) comprenant une première portion d'ouverture (17) pour recevoir l'élément de fixation (3) correspondant et une seconde portion d'ouverture (18) pour maintenir l'élément de fixation (3) dans une position de montage.

2. Système de fixation selon la revendication 1, dans lequel le support (4) et l'élément de recouvrement (5) forment deux pièces séparées, l'élément de recouvrement (5) pouvant de préférence être fixé de manière détachable au support (4), en particulier avant et/ou après que le support (4) a été monté sur le pare-brise (6).

3. Système de fixation selon la revendication 1, dans lequel le support (4) est intégré dans l'élément de recouvrement (5), les portions de montage (7) du support (4) étant de préférence intégrées dans l'élément de recouvrement (5), les portions de montage (7) du support (4) et l'élément de recouvrement (5) formant de préférence une pièce.

4. Système de fixation selon la revendication 1, dans lequel le support (4) et l'élément de recouvrement (5) sont reliés l'un à l'autre de manière pivotante, de préférence par au moins une charnière (26), l'élément de recouvrement (5) étant pivotant autour du support (4) dans une position dans laquelle le dispositif de recouvrement (2) est fermé et une position dans laquelle le dispositif de recouvrement (2) est ouvert et de préférence accessible.

5. Système de fixation selon l'une quelconque des revendications précédentes, dans lequel le support (4) et/ou l'élément de recouvrement (5) comprennent au moins une portion de réception et de maintien (10) pour recevoir et maintenir l'au moins un composant électronique (9), le composant électronique (9) étant en particulier un capteur, tel qu'un capteur de pluie, un capteur de température, un capteur de lumière ou une caméra (29).

6. Système de fixation selon l'une quelconque des revendications précédentes, dans lequel au moins une portion de montage (7) comprend un crochet (19) supplémentaire pour s'enclencher sur l'élément de fixation (3) quand l'élément de fixation (3) a atteint sa position de montage sur la portion de montage.

7. Système de fixation selon l'une quelconque des revendications précédentes, dans lequel le support (4) comprend au moins un moyen de verrouillage (27) qui est conçu pour se bloquer en position sur l'élément de recouvrement (5), l'élément de recouvrement (5) étant de préférence pourvu d'une première partie de paroi (28) correspondante qui dépasse d'une paroi intérieure de l'élément de recouvrement (5) et étant conçu de sorte que le moyen de verrouillage (27) se bloque en position sur ladite première partie de paroi (28).

8. Système de fixation selon l'une quelconque des revendications précédentes, dans lequel la portion de réception et de maintien (10) du support (4) comprend des moyens de réception (30) pour recevoir l'au moins un composant électronique (9), les moyens de réception (30) étant conçus pour recevoir un moyen de fixation (31) correspondant du composant électronique (9) destiné à être monté sur le support (4), l'élément de recouvrement (5) comprenant de préférence une deuxième partie de paroi (33) qui dépasse de la paroi intérieure de l'élément de recouvrement (5) et qui est positionnée et conçue pour retenir le moyen de fixation (31) correspondant du composant électronique (9) quand le dispositif de recouvrement (2) est fermé.

9. Système de fixation selon l'une quelconque des revendications précédentes, dans lequel l'élément de recouvrement (5) comprend une troisième partie de paroi (34) qui dépasse de la paroi intérieure de l'élément de recouvrement (5) dans une direction verticale et qui est en contact avec le support (4) quand le dispositif de recouvrement (2) est fermé.

10. Système de fixation selon l'une quelconque des revendications précédentes, dans lequel le dispositif de recouvrement (2) comprend un organe de recouvrement de lumière diffuse (21), l'organe de recouvrement de lumière diffuse (21) étant intégré dans l'élément de recouvrement (5) ou le support (4) ou l'organe de recouvrement de lumière diffuse (21) formant une pièce séparée qui est conçue pour pouvoir être fixée à une caméra (29) en guise de composant électronique (9), pour pouvoir être fixée au support (4) et/ou pour pouvoir être fixée à l'élément de recouvrement (5).

11. Système de fixation selon l'une quelconque des revendications précédentes, dans lequel l'élément de fixation (3) est une cheville de fixation (12), la partie supérieure de la cheville de fixation (12) étant une tête (15) qui est reliée à la base (13) par une tige (14).

12. Système de fixation selon la revendication 11, dans lequel la portion de montage (7) est pourvue de nervures (20) supplémentaires qui sont conçues pour venir en prise avec la cheville de fixation (12) correspondante pour maintenir le support (4) dans sa position.

13. Système de fixation selon l'une des revendications 1 à 10, dans lequel l'élément de fixation (3) est un clip de fixation (22), la partie supérieure du clip de fixation (22) étant une partie crochet (24) conçue pour s'enclencher sur une portion de montage (7) correspondante du support (4).
